Europäisches Patentamt

(19)　European Patent Office

Office européen des brevets

(11)　EP 0 734 179 A2

## (12)　EUROPEAN PATENT APPLICATION

(43) Date of publication:
25.09.1996　Bulletin 1996/39

(51) Int. Cl.⁶: H04N 7/50

(51) Int. Cl.$^6$: **H04N 7/50**

(21) Application number: 95106839.4

(22) Date of filing: 05.05.1995

(84) Designated Contracting States:
DE FR GB NL

(30) Priority: 20.03.1995 KR 9505866

(71) Applicant: DAEWOO ELECTRONICS CO., LTD
Seoul (KR)

(72) Inventor: Jung, Hae-Mook
Mapo-ku, Seoul (KR)

(74) Representative: Turi, Michael, Dipl.-Phys. et al
Samson & Partner
Widenmayerstrasse 5
80538 München (DE)

### (54)　Method and apparatus for selectively encoding/decoding a video signal

(57)　An improved method/apparatus processes a video signal by selectively encoding and decoding a plurality of blocks included in the video signal. The encoding method comprises the steps of: selecting a plurality of processing blocks from an motion compensated error signal and deciding position data of the processing blocks, wherein error values contained in the processing blocks are larger than the remaining error values and each of the position data of the processing blocks denotes a left top pixel position of each of the processing blocks; transforming the processing blocks to a plurality of sets of transform coefficients; converting the plurality of sets of transform coefficients into a plurality of sets of quantized transform coefficients; and combining the plurality of sets of quantized transform coefficients and the position data of the processing blocks, thereby providing an encoded signal.

FIG. 1

EP 0 734 179 A2

**Description**

Field of the Invention

The present invention relates to a method and apparatus for processing a video signal; and, more particularly, to a coding method and apparatus capable of reducing the transmission rate of the video signal by selectively encoding same and to a decoding method and apparatus corresponding thereto.

Description of the Prior Art

As is well known, transmission of digitized video signals can deliver video images of much higher quality than the transmission of analog signals. When a video signal comprising a sequence of image "frames" is expressed in a digital form, a substantial amount of data is generated for transmission, especially in the case of the high definition television system. Since, however, the available frequency bandwidth of a conventional transmission channel is limited, in order to transmit the substantial amounts of digital data through the limited channel bandwidth, it is inevitable to compress or reduce the volume of the transmission data. Among various video compression techniques, the so-called hybrid coding technique, which combines temporal and spatial compression techniques together with a statistical coding technique, is known to be most effective.

Most hybrid coding techniques employ the motion compensated DPCM(differential pulse code modulation), two-dimensional DCT(discrete cosine transform), quantization of DCT coefficients, and VLC(variable length coding).

The motion compensated DPCM is a process of determining the movement of an object between a current frame and its previous frame, and predicting the current frame according to the motion flow of the object to produce a difference or error signal representing the difference between the current frame and its prediction. This method is described, for example, in Staffan Ericsson, "Fixed and Adaptive Predictors for Hybrid Predictive/Transform Coding", IEEE Transactions on Communications, COM-33, No. 12, pp.1291-1302 (December 1985); and in Ninomiya and Ohtsuka, "A Motion-Compensated Interframe Coding Scheme for Television Pictures", IEEE Transactions on Communications, COM-30, No. 1, pp.201-211 (January 1982).

Specifically, in the motion compensated DPCM, current frame data is predicted from the corresponding previous frame data based on an estimation of the motion between the current and the previous frames. Such estimated motion may be described in terms of two dimensional motion vectors representing the displacement of pixels between the previous and the current frames.

There have been two basic approaches to estimate the displacement of pixels of an object. One is a block-by-block estimation and the other is a pixel-by-pixel approach.

In the block-by-block motion estimation, each block in a current frame is compared with the blocks in its previous frame until a best match is determined. From this, an interframe displacement vector (which indicates how much the block of pixels has moved between the frames) for the whole block in the current frame can be estimated.

The two-dimensional DCT, which reduces or removes spatial redundancies between image data converts a block of digital image data, for example, a block of 8x8 pixels, into a set of transform coefficient data. This technique is described in Chen and Pratt, "Scene Adaptive Coder", IEEE Transactions on Communications, COM-32, No. 3, pp.225-232 (March 1984). By processing such transform coefficient data with a quantizer, zigzag scanning, and VLC, the amount of data to be transmitted can be effectively compressed.

When applying the hybrid coding techniques to a low bit rate video signal codec system having, e.g., 64Kb/s transmission channel bandwidth, however, it is virtually impossible to transmit all the encoded video signal data due to the limited channel capacity.

Summary of the Invention

It is, therefore, a primary object of the present invention to provide an improved method and apparatus for encoding and decoding a video signal by selectively processing a plurality of blocks included in the video signal, thereby reducing the transmission rate of the encoded video signal.

In accordance with the present invention, there is provided a method, for use in a video signal encoder, for converting an error signal into an encoded signal wherein the error signal represents motion compensated differential pixel values between a current frame and a previous frame of a video signal, comprising the steps of:

providing a multiplicity of blocks from the error signal, each of the blocks including MxN motion compensated differential pixel values with M and N being positive integers;
calculating a mean value for each of the blocks by averaging the motion compensated differential pixel values included therein;
comparing the mean values of the blocks to select a plurality of blocks in a descending order of the mean values starting from a largest one and providing the position data of the selected blocks wherein the selected blocks do not overlap each other;
transforming the MxN motion compensated differential pixel values included in each of the selected blocks to a set of transform coefficients;
converting the set of transform coefficients into a set of quantized transform coefficients; and

combining the sets of quantized transform coefficients and the position data of the selected blocks, to thereby provide the encoded signal.

Brief Description of the Drawings

The above and other objects and features of the present invention will become apparent from the following description of preferred embodiments given in conjunction with the accompanying drawings, in which:

Fig. 1 is a block diagram of a video signal encoder in accordance with the present invention;
Fig. 2 depicts a detailed block diagram of the image signal encoder shown in Fig. 1;
Fig. 3 provides a detailed block diagram of the position deciding block shown in Fig. 2;
Fig. 4 illustrates a method employed in selecting the processing blocks at the position deciding block;
Fig. 5 represents a detailed block diagram of the image signal decoder shown in Fig. 1; and
Fig. 6 shows a block diagram of a video signal decoder in accordance with the present invention.

Detailed Description of the Preferred Embodiments

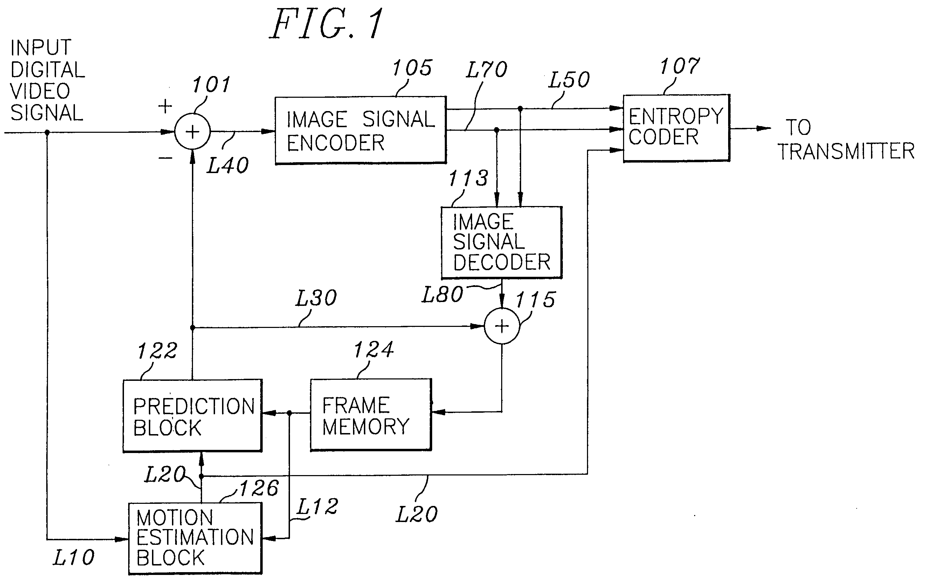

Referring to Fig. 1, there is shown a block diagram of a video signal encoder comprising an image signal encoder of the present invention.

An input digital video signal of a current frame is fed to a motion estimation block 126 via a line L10 and a subtractor 101. At the motion estimation block 126, the current frame signal on the line L10 and a reconstructed previous frame signal on a line L12 from a frame memory 124 are processed to estimate a set of motion vectors by employing the conventional block-by-block estimation method, each of the motion vectors representing a displacement between a search block of the current frame and a best matching block included in a corresponding search region of the previous frame.

The motion vectors on a line L20 provided from the motion estimation block 126 are applied to a prediction block 122 and an entropy coder 107. In response to the motion vectors, a predicted current frame signal is generated at the prediction block 122 on a block-by-block basis by retrieving pixel data corresponding to the motion vectors from the frame memory 124. The predicted current frame signal is provided to the subtractor 101 and an adder 115 via a line L30.

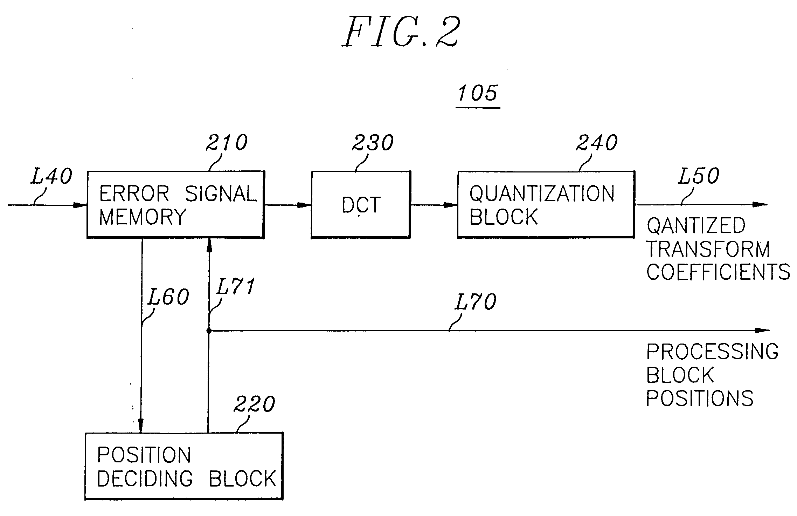

The predicted current frame signal from the prediction block 122 is subtracted from the current frame signal at the subtractor 101; and the resultant data, i.e., an error signal denoting differential pixel values or error values between the current frame and the predicted current frame, is dispatched via a line L40 to an image signal encoder 105 of the present invention. At the image signal encoder 105, the error signal is processed, in accordance with the present invention, to detect a plurality of processing blocks based on error values of pixels included therein. Then, the processing blocks are processed using the DCT and quantization to provide a plurality of sets of quantized transform coefficients. Outputs from the image signal encoder 105 serve to provide the position data of the processing blocks on a line L70 and the quantized transform coefficients on a line L50. Details of the image signal encoder 105 will be described hereinafter with reference to Figs. 2 to 4.

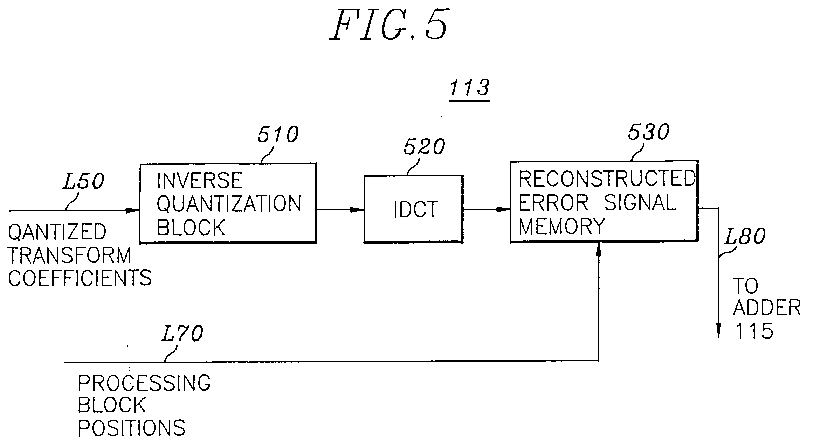

The quantized transform coefficients and the position data of the processing blocks are transmitted via two signal paths: one that leads to the entropy coder 107, wherein the quantized transform coefficients and the position data of the processing blocks are coded together with the motion vectors supplied through line L20 by using, for example, a combination of run-length and variable length coding techniques and are provided to a transmitter (not shown) for the transmission thereof; and the other to an image signal decoder 113, wherein the sets of the quantized transform coefficients are converted back into a reconstructed error signal. Details of the image signal decoder 113 will be described with reference to Fig. 5.

The reconstructed error signal on a line L80 from the image signal decoder 113 and the predicted current frame signal from the prediction block 122 are combined at the adder 115 to provide a reconstructed current frame signal to be written onto the frame memory 124.

Reconstruction of the error signal is required in order for the encoder to monitor the behavior of the decoder in a receiver to thereby prevent the encoder's reconstructed current frame signal from diverging from the one in the decoder.

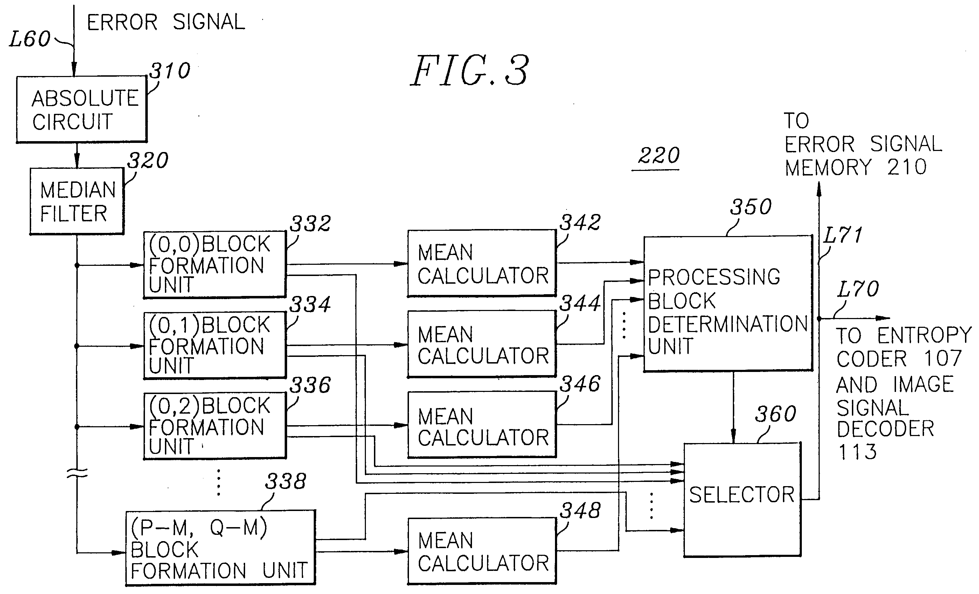

Referring to Fig. 2, there is provided a detailed block diagram of the image signal encoder 105 shown in Fig. 1. The error signal on a line L40 provided from the subtractor 101 is stored in an error signal memory 210. The error signal stored in the error signal memory 210 is fed to a position deciding block 220 through a line L60. The position deciding block 220 determines the plurality of processing blocks from the error signal based on the error values of the pixels within the processing blocks and provides the position data of the processing blocks to the error signal memory 210. Details of the position deciding block 220 will be described with reference to Fig. 3.

The position data of the processing blocks from the position deciding block 220 are coupled to the error signal memory 210 through a line L71 and to the entropy coder 107 and the image signal decoder 113 shown in Fig. 1 through the line L70. In response to the position data of the processing blocks, the error signal memory 210 provides a set of error values for each processing block to a DCT block 230. Each of the processing blocks is processed in the DCT block 230 to provide a set of transform coefficients to a quantization block 240. The transform coefficients are then quantized in a quantization block 240 to provide a set of quantized transform coefficients on a line L50 to the entropy coder 107 and the image signal decoder 113 shown in Fig. 1.

Referring to Fig. 3, there is presented a detailed block diagram of the position deciding block 220 shown in Fig. 2. The error signal from the error signal memory 210 shown in Fig. 2 is applied to an absolute circuit 310. The absolute circuit 310 converts each error value included in the error signal into its absolute value. The absolute error values from the absolute circuit 310 are filtered by using a conventional median-filtering method at a median filter 320 on a pixel-by-pixel basis. Specifically, at the median filter 320, the input pixel is replaced by the median of pixels contained in a window around the pixel. That is, the median filter 320 averages the absolute error values of the pixels within a suitably chosen window, which includes the pixel to be filtered at the center thereof, by multiplying predetermined filter coefficients thereto; and assign the averaged value as a filtered error value of the pixel. The filtered error signal is inputted to an N number of (i,j) block formation units, e.g., 332, 334, 336, and 338.

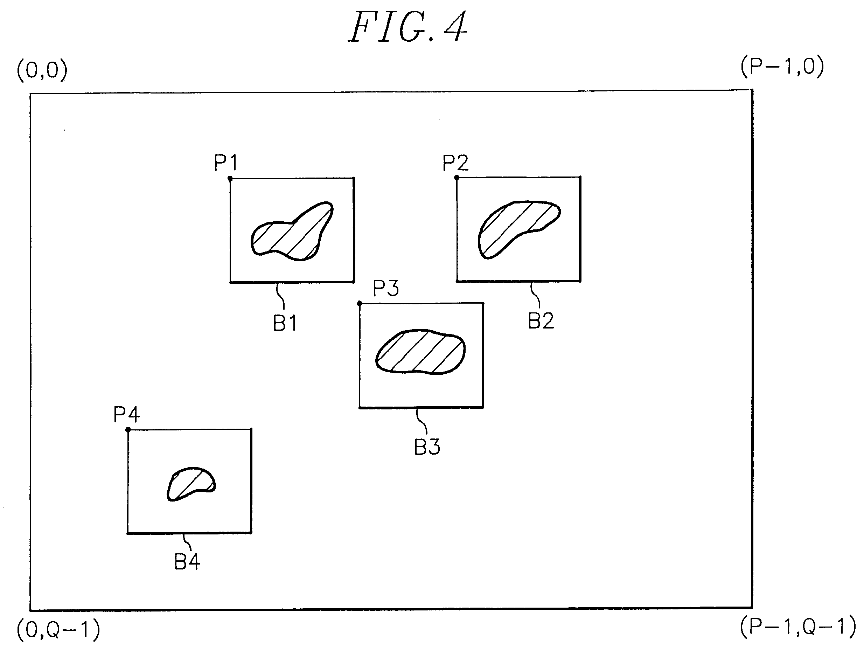

Referring to Fig. 4, there is illustrated a frame of the filtered error values of, e.g., PxQ pixels, wherein the numerals in respective parentheses denote the x and y coordinates of four corner pixels of the frame. Each of the (i,j) block formation units generates an (i,j) error block of MxM, e.g., 8x8, pixels from the frame, wherein i and j represents the x and y coordinates of a left top corner pixel of the error block, respectively.

Referring back to Fig. 3 which is intended to show a (P- M+1)x(Q-M+1) number of block formation units, only 4 units are depicted for the sake of simplicity. A first block formation unit, e.g., the (0,0) block formation unit 332, provides a set of filtered error values for an error block located at (0,0). Similarly, a second block formation unit, e.g., the (0,1) block formation unit 334, and an Nth block formation unit, e.g., the (P-M,Q-M) block formation unit 338, provide sets of filtered error values for the error blocks positioned at (0,1) and (P-M,Q-M), respectively.

The block formation units 332 to 338 provide respective position data of the error block and sets of filtered error values to a selector 360 and corresponding mean calculators 342, 344, 346 and 348, respectively. Each of the mean calculators 342 to 348 provides a processing block determination unit 350 with a mean value for each error block by averaging the filtered error values included therein. At the processing block determination unit 350, the mean values are compared to select a predetermined number of, e.g., 4, non-overlapping error blocks in a descending order of their mean values starting from the largest one. For instance, if an error block B3 shown in Fig. 4 has the largest mean value among all of the error blocks, the error block B3 is selected first. Subsequently, an error block, e.g., B1, having a largest mean value among the remaining error blocks which do not overlap the previously selected error block, i.e., B3, is selected next. This procedure is repeated until all the predetermined number of non-overlapping error blocks, e.g., B1, B2, B3 and B4, are selected. These error blocks are selected as the processing blocks to be processed at the DCT block 230 shown in Fig. 2. Outputted from the processing block determination unit 350 is a selection signal which represents the processing blocks. Even though the number of processing blocks is predetermined in accordance with the preferred embodiment of the invention, it should be apparent to those skilled in the art that it can be adjusted according to the buffer occupancy, i.e., the amount of data in an output buffer(not shown).

The selector 360, in response to the selection signal from the processing block determination unit 350, determines the positions of the processing blocks based on the position data of the error block transmitted from the block formation units 332 to 338; and provides them as the position data of the processing blocks to the error signal memory 210 shown in Fig. 2 via a line L71 and to the entropy coder 107 and the image signal decoder 113 shown in Fig. 1 via the line L70. For example, if blocks B1 to B4 shown in Fig. 4 are selected as the processing blocks, the left top pixel positions thereof, e.g., P1 to P4, become the position data of the processing blocks.

Referring to Fig. 5, there is provided a detailed block diagram of the image signal decoder 113 shown in Fig. 1. The quantized transform coefficients from the image signal encoder 105 shown in Fig. 1 are fed to an inverse quantization block 510, wherein the quantized transform coefficients on a line L50 are converted back into the reconstructed transform coefficients. The transform coefficients are provided to an IDCT(inverse DCT) block 520 to provide the reconstructed error values included in the processing blocks. The reconstructed error values are fed to a reconstructed error signal memory 530 wherein a plurality of sets of the reconstructed error values are stored in corresponding positions based on the position data of the processing blocks fed on the line L70. The remainder of the reconstructed error signal memory 530 is set to 0 to provide a reconstructed error signal to the adder 115 shown in Fig. 1 through a line L80.

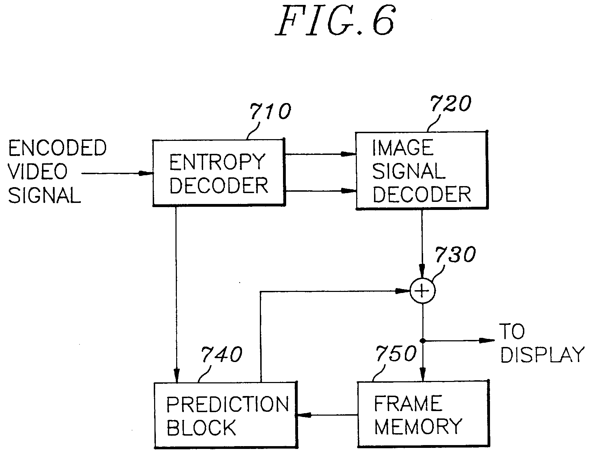

Referring to Fig. 6, there is illustrated a block diagram of a video signal decoder including an image signal decoder 720, an adder 730, a prediction block 740 and a frame memory 750, which are essentially identical to the image signal decoder 113, the adder 115, the prediction block 122 and the frame memory 124 of the video signal encoder shown in Fig. 1, respectively.

The encoded video signal transmitted from the video signal encoder shown in Fig. 1 is fed to an entropy decoder 710. Then, the entropy decoder 710 decodes the encoded video signal to provide the motion vectors to the prediction block 740, and the position data of the processing blocks and the quantized transform coefficients to the image signal decoder 720. At the image signal decoder 720, the position data of the processing blocks and the quantized transform coefficients are processed in an identical manner as in the image signal decoder 113 of the video signal encoder, thereby providing the reconstructed error signal to the adder 730. In the meanwhile, the prediction block 740 provides the adder 730 with the predicted current frame signal by retrieving the pixel data from the frame memory 750 in response to the motion vectors. The predicted current frame signal and the reconstructed error signal are combined at the adder 730 to provide the reconstructed current frame signal to a display unit (not shown) and the frame memory 750.

Using the method explained above, a plurality of processing blocks are selected and processed to provide a low bit-rate encoded video signal. The bitrate of the encoded signal can be easily altered by changing the number of processing blocks in a frame.

While the present invention has been described with respect to the particular embodiments, it will be apparent to those skilled in the art that various changes and modifications may be made without departing from the spirit and scope of the invention as defined in the following claims.

**Claims**

1. A method, for use in a video signal encoder, for converting an error signal into an encoded signal wherein the error signal represents motion compensated differential pixel values between a current frame and a previous frame of a video signal, comprising the steps of:

   providing a multiplicity of blocks from the error signal, each of the blocks including MxN motion compensated differential pixel values with M and N being positive integers;
   calculating a mean value for each of the blocks by averaging the motion compensated differential pixel values included therein;
   comparing the mean values of the blocks to select a plurality of blocks in a descending order of the mean values starting from a largest one and providing the position data of the selected blocks wherein the selected blocks do not overlap each other;
   transforming the MxN motion compensated differential pixel values included in each of the selected blocks to a set of transform coefficients;
   converting the set of transform coefficients into a set of quantized transform coefficients; and
   combining the sets of quantized transform coefficients and the position data of the selected blocks, to thereby provide the encoded signal.

2. An encoding apparatus, for use in a video signal encoder, for converting an error signal into an encoded signal wherein the error signal represents motion compensated differential pixel values between a current frame and a previous frame of a video signal, comprising:

   means for providing a multiplicity of blocks from the error signal, each of the blocks including MxN motion compensated differential pixel values with M and N being positive integers;
   means for calculating a mean value for each of the blocks by averaging the motion compensated differential pixel values included therein;
   means for comparing the mean values of the blocks to select a plurality of blocks in a descending order of the mean values starting from a largest one and providing the position data of the selected blocks wherein the selected blocks do not overlap each other;
   means for transforming the MxN motion compensated differential pixel values included in each of the selected blocks to a set of transform coefficients;
   means for converting the set of transform coefficients into a set of quantized transform coefficients; and
   means for combining the sets of quantized transform coefficients and the position data of the selected blocks, to thereby provide the encoded signal.

3. A decoding apparatus, for use in a video signal encoder or a video signal decoder, for reconstructing an error signal, said error signal representing motion compensated differential pixel values between a current frame and a previous frame of a video signal, by decoding an encoded signal provided from an encoding apparatus for converting the error signal into the encoded signal, said encoding apparatus including: means for providing a multiplicity of blocks from the error signal, each of the blocks including MxN motion compensated differential pixel values with M and N being positive integers; means for calculating a mean value for each of the blocks by averaging the motion compensated differential pixel values included therein; means for comparing the mean values of the blocks to select a plurality of blocks in a descending order of the mean values starting from a largest one and providing the position data of the selected blocks wherein the selected blocks do not overlap each other; means for transforming the MxN motion compensated differential pixel values included in each of the selected blocks to a set of transform coefficients; means for converting the set of transform coefficients into a set of quantized transform coefficients; and means for combining the sets of quantized transform coefficients and the position data of the selected blocks, to thereby provide the encoded signal, said decoding apparatus comprising:

   means for converting each set of the quantized transform coefficients included in the encoded signal into a set of reconstructed transform coefficients;

means for inverse transforming the set of reconstructed transform coefficients to a set of reconstructed MxN motion compensated differential pixel values; and

means for providing the reconstructed error signal in response to the position data of the selected blocks, wherein the reconstructed error signal has a set of reconstructed MxN motion compensated differential pixel values at a corresponding selected block position and zero values at non-selected block positions.

FIG.1

# FIG.2

<u>105</u>

FIG.3

*FIG. 4*

## FIG.5

113

510

520

530

L50

QANTIZED
TRANSFORM
COEFFICIENTS

INVERSE
QUANTIZATION
BLOCK

IDCT

RECONSTRUCTED
ERROR SIGNAL
MEMORY

L80

TO
ADDER
115

L70

PROCESSING
BLOCK
POSITIONS

# FIG.6

ENCODED VIDEO SIGNAL → ENTROPY DECODER (710) → IMAGE SIGNAL DECODER (720) → (+) (730) → TO DISPLAY

PREDICTION BLOCK (740)

FRAME MEMORY (750)